# EUROPÄISCHE PATENTSCHRIFT

(11) **EP 3 170 772 B1**
(45) Veröffentlichungstag und Bekanntmachung des Hinweises auf die Patenterteilung: **07.11.2018**
(21) Anmeldenummer: 16203368.2
(22) Anmeldetag: 02.07.2013
(51) Int. Cl.: B65G 1/08, B23Q 7/14

(54) **ZUFÜHREINRICHTUNG**
SUPPLY DEVICE
DISPOSITIF D'AMENÉE

(30) Priorität: 03.07.2012 DE 202012102447 U
(43) Veröffentlichungstag der Anmeldung: 24.05.2017
(62) Teilanmeldung aus: 13744448.5
(73) Patentinhaber: KUKA Systems GmbH, 86165 Augsburg (DE)
(72) Erfinder: BROCKHOFF, Per-Olaf, 86316 Friedberg (DE); KARA, Yücel, 86179 Augsburg (DE)
(74) Vertreter: Ernicke, Klaus Stefan

(56) Entgegenhaltungen:
- EP-A2- 0 092 390
- US-A- 3 093 229
- US-A- 3 392 813

## Beschreibung

Die Erfindung betrifft eine Zuführeinrichtung mit den Merkmalen im Oberbegriff des Hauptanspruchs. Die Erfindung betrifft auch eine Bearbeitungsstation mit den Merkmalen im Oberbegriff des Anspruchs 15. Eine Zuführeinrichtung ist aus der WO2009/068241A1 bekannt. Sie weist eine abwärts geneigte Führungsbahn und einen mobilen Bauteilträger auf, der auf die Führungsbahn aufgesetzt und lösbar mit dieser verbunden werden kann, wobei die Führungsbahn und der Bauteilträger zusammenwirkende Rollkörper und Schienen aufweisen. Die Zuführeinrichtung weist eine Ladestelle auf, an der ein Werker einen Bauteilträger von einer zweiten und als Rücklaufbahn ausgebildeten Führungsbahn entnimmt und auf die erstgenannte Führungsbahn aufsetzt. Außerdem belädt der Werker den Bauteilträger an der Ladestelle mit einem oder mehreren Bauteilen.

Die US 3,392,813 A offenbart eine automatischen Handhabungsapparat für kistenartige Behälter, die an einer Ladestelle zugeführt, beladen und automatisch sowie gewichtsabhängig an eine schräge Führungsbahn übergeben werden.

In der EP 0 092 390 A2 ist ein Handhabungssystem für Behälter beschrieben, wobei an einer Entladestelle leere Behälter an eine schräge Führungsbahn übergeben werden. Hierfür wird eine Picking-Schiene mit einem leeren Behälter mittels eines Handgriffs und eines Lenkergetriebes geschwenkt und zugleich eine vorgeschaltete Speicherschiene gedreht.

Die aus dem Landwirtschaftssektor stammende US 3,093,229 A befasst sich mit einem Apparat zum manuellen Handhaben, Sortieren und Befüllen von Kisten mit Feldfrüchten, der zum Anbau an eine Erntemaschine vorgesehen ist. Die US 3,093,229 A offenbart eine Zuführeinrichtung nach dem Oberbegriff des Anspruchs 1. Es ist Aufgabe der vorliegenden Erfindung, eine verbesserte Zuführtechnik aufzuzeigen.

Die Erfindung löst diese Aufgabe mit den Merkmalen im Hauptanspruch.

Die beanspruchte Zuführeinrichtung, die
Bearbeitungsstation mit einer Zuführeinrichtung und das Zuführverfahren mit der Übergabetechnik bzw. der Übergabeeinrichtung haben den Vorteil, dass sie dem Werker die Arbeit erleichtern und die Ergonomie verbessern. Sie können außerdem für eine bessere und einfachere Positionierung eines Bauteilträgers bei der Übergabe an die Führungsbahn sorgen.

Ferner werden die Leistungsfähigkeit und die Betriebssicherheit sowie die Verfügbarkeit der Zuführeinrichtung erhöht. Die Zuführeinrichtung und die Übergabetechnik sind einfach zu bedienen, haben einen geringen Bauaufwand und sind besonders wirtschaftlich.

Die Übergabetechnik hat den Vorteil, dass sie eine manuelle Bedienung ermöglicht und mit der Handkraft des Werkers auskommt. Ein Rückstellelement bietet hierbei eine Entlastung oder Bedienungsvereinfachung und kann ggf. die zu bewegenden Lasten teilweise ausgleichen. Die Übergabeeinrichtung kann ohne motorische Antriebe und deren Steuermittel auskommen. Dies verringert erheblich den Bau- und Sicherheitsaufwand. Insbesondere kann auf die von der europäischen Maschinenrichtlinie geforderten Sicherheitsaufwendungen verzichtet werden.

Für die Ausgestaltung der Übergabeeinrichtung gibt es verschiedene Möglichkeiten.

Zum Einen kann die Übergabeeinrichtung als Vorpositioniereinrichtung für einen manuell übergebenen losen Bauteilträger ausgebildet sein. Die Vorpositionierung erleichtert die schnelle und zielgenaue Positionierung und Übergabe von Bauteilträgern. Sie entlastet dabei außerdem die Gleit- und Führungsmittel, insbesondere die als Rollkörper ausgebildeten Gleitmittel. In einer erhabenen Aufsetzposition kommen die Gleit- und Führungsmittel noch nicht in Kontakt. Dies geschieht erst in einer abgesenkten Übergabeposition mit einer kontrollierten und weitgehend kraft- und stoßfreien Bewegung, wobei außerdem ein exakter und gegebenenfalls formschlüssiger Eingriff der Gleit- und Führungsmittel sichergestellt werden kann.

Die Gleitmittel, insbesondere Rollkörper, sind vorzugsweise an den ein oder mehreren Bauteilträgern und die Führungsmittel, insbesondere Schienen, an der oder den Führungsbahnen angeordnet. Die Zuordnung kann auch umgekehrt sein. Die Gleit- und Führungsmittel können zumindest bereichsweise eine gegenseitig angepasste unebene Kontur für einen formschlüssigen Eingriff aufweisen.

Die Übergabeeinrichtung ist als Hubeinrichtung ausgebildet, mit der ein Bahnabschnitt mitsamt einem darauf befindlichen Bauteilträger bewegt wird, vorzugsweise mit einer vertikalen

Richtungskomponente. Dies entlastet den Werker von Hebeaufgaben und verbessert die Ergonomie, sowie die Leistungsfähigkeit des Werkers und der Zuführeinrichtung. Die Hubeinrichtung hat besondere Vorteile bei einer Zuführeinrichtung, die mehrere Führungsbahnen für Vor- und Rücklauf von beladenen und leeren Bauteilträgern aufweist. Mit der Hubeinrichtung kann ein Bauteilträger außerdem in eine belastungsgünstige Position gebracht und dort vom Werker mit ein oder mehreren Bauteilen beladen werden. Vorzugsweise ist die Hubeinrichtung als Schwenkeinrichtung ausgebildet, die eine besonders einfache und sichere Kinematik aufweist und bei der das Rückstellelement in einfacher Weise als Gegengewicht ausgebildet sein kann. Wenn mehrere übereinander angeordnete Führungsbahnen eine unterschiedliche Neigung aufweisen, kann die Hubeinrichtung eine Einrichtung zur Anpassung der Neigung des Bahnabschnitts an die jeweilige Führungsbahn aufweisen.

In einer Ausgestaltung der Zuführeinrichtung weist die Hubeinrichtung eine Vorpositioniereinrichtung für einen losen Bauteilträger an dem beweglichem Bahnabschnitt auf, an welcher der Bauteilträger vom Werker mit anfänglicher Distanz von der Führungsbahn in vorgegebener Position aufgelegbar und temporär fixierbar sowie anschließend an die Führungsbahn unter Eingriffsbildung von Gleit- und Führungsmitteln übergebbar ist.

In einer Ausgestaltung weist die Zuführeinrichtung eine Sicherheitseinrichtung für die Kontrolle der Bewegung eines Bauteilträgers auf. Eine Sicherheitseinrichtung an der Vorpositioniereinrichtung kann eine Freigabesicherung mit einem Hubstift aufweisen.

In den Unteransprüchen sind weitere vorteilhafte Ausgestaltungen der Erfindung angegeben.

Die Zuführeinrichtung kann auch die nachstehenden, noch nicht beanspruchten Ausgestaltungsmerkmale aufweisen.

In einer Ausgestaltung der Zuführeinrichtung weist die Vorpositioniereinrichtung Einweiser für den Bauteilträger auf.

In einer Ausführung der Zuführeinrichtung weist die Vorpositioniereinrichtung eine relativ zur Führungsbahn beweglich gelagerte Aufnahme für einen Bauteilträger und eine manuell bedienbare und mit Handkraft betätigbare Bewegungseinrichtung für die Aufnahme auf.

Eine Aufnahme der Vorpositioniereinrichtung ist zwischen einer erhabenen Aufsetzposition und einer abgesenkten Übergabeposition beweglich, wobei die Gleit- und Führungsmittel der Bauteilträger und der Führungsbahn in der Aufsetzposition distanziert und in der Übergabeposition im Eingriff sind.

Eine Bewegungseinrichtung einer Aufnahme der Vorpositioniereinrichtung weist ein Bedienmittel und ein Rückstellelement auf. Das Rückstellelement kann als Feder ausgebildet sein und kann einen Anschlag aufweisen. Das Bedienmittel kann an der Aufnahme angeordnet sein und kann einen beweglichen Griff mit einer Rückstellung, insbesondere einer Feder, und mit einer Verriegelung aufweisen.

Eine Aufnahme der Vorpositioniereinrichtung weist ein Schwenklager auf.

Eine Aufnahme der Vorpositioniereinrichtung ist in der Führungsbahn, insbesondere Zuführbahn, angeordnet und ist an der Führungsbahn, insbesondere Zuführbahn, gelagert.

Eine Aufnahme der Vorpositioniereinrichtung weist Stütz- und Positioniermittel, insbesondere Sockel und Pins, für einen Bauteilträger auf. Ein Stützmittel der Aufnahme kann ein Dämpfelement aufweisen.

Eine Aufnahme der Vorpositioniereinrichtung weist ein Sicherungsmittel, insbesondere eine Indizierstift, zur Detektion passender Bauteilträger auf.

Offenbart wird auch ein Verfahren zum Zuführen von Bauteilen mittels einer Zuführeinrichtung, welche eine abwärts geneigte Führungsbahn, einen mobilen, mit der Führungsbahn lösbar verbundenen Bauteilträger und zusammenwirkende Gleit- und Führungsmittel, insbesondere Rollkörper und Schienen, an der Führungsbahn und am Bauteilträger aufweist, wobei die Zuführeinrichtung eine Ladestelle aufweist, an der ein Bauteilträger von einem Werker mit der Führungsbahn verbunden und ggf. mit einem oder mehreren Bauteilen beladen wird, wobei ein Bauteilträger an der Ladestelle mittels einer manuell bedienten und mit Handkraft gegen ein Rückstellelement betätigten Übergabeeinrichtung positioniert und an die Führungsbahn übergeben wird und die Übergabeeinrichtung als Hubeinrichtung ausgebildet ist.

In einer Ausgestaltung des Verfahrens wird ein loser Bauteilträger vom Werker an einer Vorpositioniereinrichtung mit anfänglicher Distanz von der Führungsbahn in vorgegebener Position aufgelegt und temporär fixiert sowie anschließend an die Führungsbahn unter Eingriffsbildung von Gleit- und Führungsmitteln übergeben.

Die Erfindung betrifft auch eine Bearbeitungsstation nach Anspruch 15.

Die Erfindung ist in den Zeichnungen beispielhaft und schematisch dargestellt. Im Einzelnen zeigen:
- Figur 1:: eine schematische Seitenansicht einer Zuführrichtung mit mehreren Führungsbahnen, mobilen Bauteilträgern und einer Übergabeeinrichtung an einer Ladestelle,
- Figur 2:: eine perspektivische und abgebrochene Draufsicht auf eine Führungsbahn mit einer Vorpositioniereinrichtung,
- Figur 3:: eine abgebrochen und vergrößerte Detaildarstellung der Vorpositioniereinrichtung von Figur 2,
- Figur 4:: eine teilweise geschnittene Seitenansicht der Vorpositioniereinrichtung von Figur 2 und 3 mit Darstellung einer Aufsetz- und Übergabeposition,
- Figur 5:: eine Unteransicht eines Bauteilträgers mit Rollkörpern,
- Figur 6:: einen Längsschnitt durch den Bauteilträger gemäß Schnittlinie VI/VI von Figur 5,
- Figur 7:: einen Querschnitt durch den Bauteilträger gemäß Schnittlinie VII/VII von Figur 5 und
- Figur 8 bis 10:: die Vorpositioniereinrichtung in verschiedenen Betriebsstellungen bei der Positionierung und Übergabe eines Bauteilträgers an eine Führungsbahn.

Die Erfindung betrifft eine Zuführeinrichtung (1) für Bauteile (3).

Ferner betrifft die Erfindung eine Bearbeitungsstation (2).

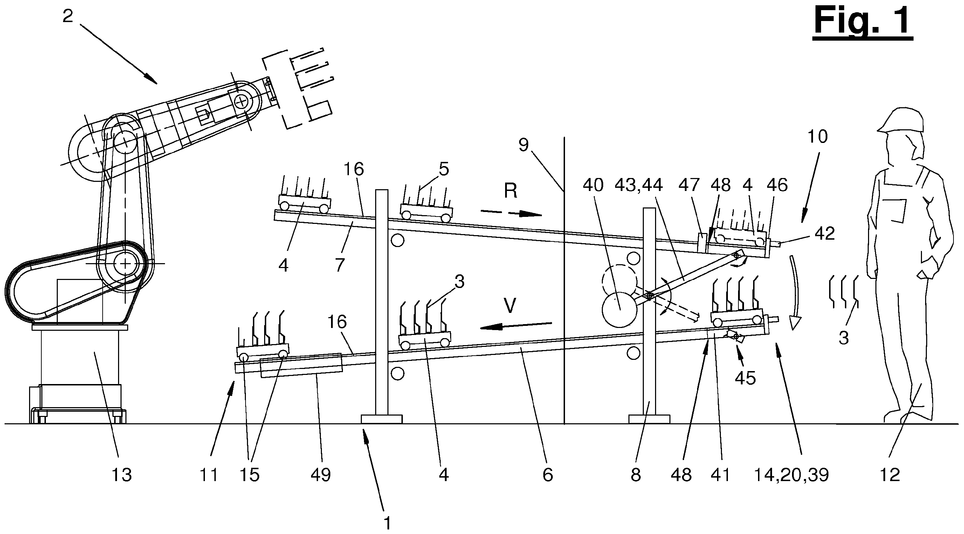

Figur 1 zeigt in einer schematischen Seitenansicht eine Zuführeinrichtung (1) in einer Bearbeitungsstation (2).

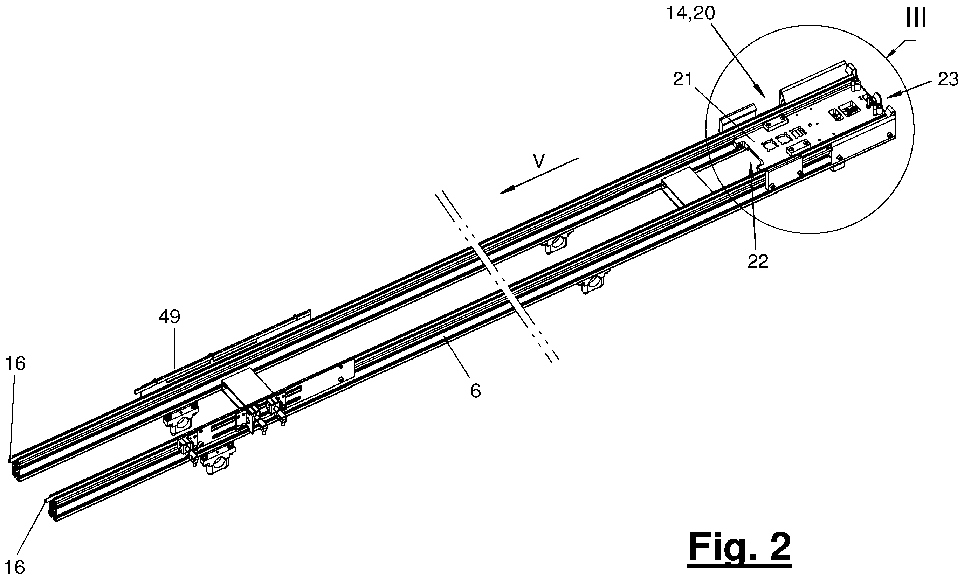

Die Zuführeinrichtung (1) weist mindestens eine Führungsbahn (6) auf, die eine schräg abwärts gerichtete Neigung besitzt und die sich von einer Ladestelle (10) zu einer Entladestelle (11) erstreckt. Figur 2 zeigt eine solche Führungsbahn (6) in einer abgebrochenen und perspektivischen Draufsicht.

Die Führungsbahn (6) ist an einem Gestell (8) angeordnet und kann in ihrer Neigung einstellbar sein. Sie hat eine endliche Länge und vorzugsweise eine gerade Erstreckung. Das Bahnende an der Ladestelle (10) liegt höher als das Bahnende an der Endladestelle (11).

Die Zuführeinrichtung (1) dient der Zuführung von Bauteilen (3) von der Ladestelle (10) zu der Endladestelle (11), wobei für den Bauteiltransport ein oder mehrere mobile Bauteilträger (4) vorgesehen sind, die mit der Führungsbahn (6) lösbar verbunden sind und sich an dieser durch Schwerkraft entlang bewegen. Die Führungsbahn (6) fungiert hierbei als Zuführbahn für beladene Bauteilträger (4) .

Die Bauteilträger (4) weisen eine oder mehrere feste oder gegebenenfalls wechselbare Bauteilaufnahmen (5) für jeweils ein oder mehrere Bauteile (3) auf. Vorzugsweise handelt es sich um Karosseriebauteile für Fahrzeug-Rohkarosserien, insbesondere um Blechteile. Die Bauteile (3) können von beliebiger Art und Größe sein. Sie können untereinander gleich oder unterschiedlich sein. Unterschiedliche Bauteile (3) können zusammen gehören und ein Set bilden. Die Bauteile (3) werden an der Ladestelle (10) von einem Werker (12) auf den oder die Bauteilträger (4) geladen. An der Endladestelle (11) folgt eine vorzugsweise automatisierte Endladung mittels einer Bearbeitungseinrichtung (13), die z.B. einen in Figur 1 gezeigten mehrachsigen Roboter mit einer Greifeinrichtung aufweisen kann.

Der oder die Bauteilträger (4) und die Führungsbahn (6) weisen zusammen wirkende Gleit- und Führungsmittel (15,16) auf. Die Gleitmittel (15) sind vorzugsweise als Rollkörper, insbesondere als Räder und die Führungsmittel (16) als Schienen ausgebildet. In der gezeigten Ausführungsform befinden sich die Gleitmittel (15) bzw. Rollkörper an dem oder den Bauteilträgern (4), wobei die Führungsmittel (16), insbesondere paarweise angeordnete Schienen, an der Führungsbahn (6) angeordnet sind. Die Zuordnung kann alternativ umgekehrt sein, wobei die Führungsbahn (6) als Rollenbahn ausgeführt ist. In einer weiteren Variante können der oder die Bauteilträger (4) und die Führungsbahn (6) sowohl Gleitmittel (15), als auch Führungsmittel (16) mit jeweils wechselseitigem Eingriff aufweisen.

Die Führungsbahn (6) kann an ihrem zur Endladestelle (11) gelegenen Endbereich eine Positioniereinrichtung (49) aufweisen, mit der die ankommenden Bauteilträger (4) gestoppt und entladegerecht positioniert werden können. Außerdem kann an der Positioniereinrichtung (49) bei einer evtl. Staubildung von mehreren Bauteilträgern (4) eine Vereinzelung mit der besagten anschließenden Positionierung statt finden. Figur 1 und 2 zeigen diese Positioniereinrichtung (49).

In der in Figur 1 gezeigten Ausführungsform ist außerdem eine weitere Führungsbahn (7) vorhanden, die mit vertikalem Abstand über der Zuführbahn (6) angeordnet ist und die sich mit entgegen gesetzt gerichteter Neigung von der Entladestelle (11) zur Ladestelle (10) erstreckt. Sie dient als Rücklaufbahn (7) für den Rücktransport von leeren Bauteilträgern (4) zur Ladestelle (10) und ist ebenfalls am Gestell (8) angeordnet. Die Höhenanordnung kann auch vertauscht sein, wobei die Zuführbahn (6) über der Rückführbahn (7) angeordnet ist.

Die Rückführbahn (7) ist vorzugsweise konstruktiv gleichartig wie die Zuführbahn (6) ausgebildet. Die Führungsbahnen (6,7) können auch mehrfach vorhanden sein. In Figur 1 markieren Pfeile (V,R) die Vorlauf- und Rücklaufrichtung. Bei einer solchen Zuführeinrichtung (1) mit Zuführ- und Rücklaufbahn(en) (6,7) bewegen sich die Bauteilträger (4) in einem Kreislauf, wobei sie an der Lade- und Entladestelle (10,11) jeweils von einer Führungsbahn auf die andere umgesetzt werden. An der Entladestelle (11) kann dies automatisiert geschehen, z.B. durch den gezeigten Roboter (13) mit der Greifeinrichtung. Alternativ kann eine eigene Umsetzeinrichtung vorhanden sein.

An der Ladestelle (10) weist die Zuführeinrichtung (1) eine vom Werker (12) manuell bedienbare und mit Handkraft betätigbare Übergabeeinrichtung (14) zur positionierten Übergabe eines Bauteilträgers (4) an die Führungsbahn oder Zuführbahn (6) auf. Die manuelle Bedienung und Betätigung kann gegen ein Rückstellelement (31,40) geschehen.

Die Übergabeeinrichtung (14) und das zugehörige Übergabeverfahren können unterschiedlich ausgebildet sein. Die Übergabeeinrichtung (14) ist als Hubeinrichtung (39), insbesondere als Übersetzhilfe, ausgebildet.

In Figur 1 ist eine Hubeinrichtung (39) mit ihren Teilen dargestellt, wobei eine gegebenenfalls zusätzlich vorhandene Vorpositioniereinrichtung (20) nur angedeutet ist. Figur 2 bis 10 zeigen eine Vorpositioniereinrichtung (20) im Detail.

Die in Figur 1 dargestellte Hubeinrichtung (39) dient der Umsetzung eines Bauteilträgers (4) von der in Figur 1 höher liegenden Rücklaufbahn (7) auf die tiefer liegende Zuführbahn (6), wobei die Hubeinrichtung (39) vom Werker (12) manuell bedient und mit Handkraft gegen ein Rückstellelement (40) betätigt wird. Bei dieser Umsetzung wird der Bauteilträger an die Führungsbahn bzw. Zuführbahn (6) positioniert übergeben.

Das Umsetzen eines Bauteilträgers (4) erfolgt durch eine von der Hubeinrichtung (39) ausgeführte Hebebewegung eines Bahnabschnitts (41) der Führungsbahn (6) mitsamt einem auf dem Bahnabschnitt (41) angeordneten Bauteilträger (4). Die Hebebewegung hat eine vertikale Richtungskomponente. Der Bahnabschnitt (4) ist vorzugsweise ein Endabschnitt der Führungsbahn (6). Wenn wie in Figur 1 auch eine Rücklaufbahn (7) vorhanden ist, kann der bewegliche Bahnabschnitt (41) beiden Führungsbahnen (6,7) zugeordnet und zwischen diesen beweglich sein. In einer nicht dargestellten Ausführungsvariante kann die Rücklaufbahn (7) entfallen, wobei ein oder mehrere leere Bauteilträger (4) in anderer Weise, z.B. gestapelt in einem Rack der Ladestelle (10) zugeführt und an den beweglichen Bahnabschnitt (41) der Zuführbahn (6) überschoben werden.

Bei der Zuführeinrichtung (1) von Figur 1 erfolgt die Hubbewegung bei der Übergabe eines Bauteilträgers (4) von der oberen Rücklaufbahn (7) nach unten zu der tieferen Zuführbahn (6). Die Anordnung kann auch umgekehrt sein, wobei dann die Hubbewegung nach oben zu der höher liegenden Zuführbahn (6) gerichtet ist.

In der gezeigten Ausführungsform von Figur 1 erfolgt die Hubbewegung des Bahnabschnitts (41) mit dem Bauteilträger (4) auf direktem Wege von der Rücklaufbahn (7) zur Zuführbahn (6), wobei der Bauteilträger (4) an der Übergabe- und Ankoppelstellung an der Zuführbahn (6) vom Werker (12) mit Bauteilen (3) beladen werden kann. Der fertig beladenen Bauteilträger (4) rollt nach einer Sicherheitsprüfung und darauf folgender Freigabe an der Zuführbahn (6) nach unten. Der leere Bahnabschnitt (41) kann dann unter Einwirkung des Rückstellelements (40) wieder zur Rücklaufbahn (7) bewegt werden und kann dort den nächsten leeren Bauteilträger (4) aufnehmen.

In Abwandlung dieser Ausgestaltung und Ablauffunktion kann die Hubeinrichtung (39) bedarfsweise in mindestens einer Zwischenstellung zwischen den Führungsbahnen (6,7), die für den Werker (12) für eine Bauteilbeladung ergonomisch günstiger ist, mit einer entsprechenden Vorrichtung arretiert werden. Dies kann gegebenenfalls auch eine Hubposition unterhalb der Zuführbahn (6) sein, wobei für die nachfolgende Übergabe der Bahnabschnitt (41) mit dem beladenen Bauteilträger (4) wieder nach oben und in Anschluß an die Führungsbahn (6) gehoben wird.

Der Bahnabschnitt (41) bildet bei beiden Führungsbahnen (6,7) einen Endabschnitt. Der Bahnabschnitt (41) kann dabei an die jeweilige Führungsbahn (6,7) bündig andocken und mit einer Kopplungseinrichtung (48) in der Andockstellung gesichert und arretiert werden. Der Bahnabschnitt (41) fluchtet dabei vorzugsweise jeweils mit der angedockten Führungsbahn (6,7) und nimmt deren Neigungswinkel an. Bei der Hubbewegung ändert dann der Bahnabschnitt (41) seine Neigung und passt sich an die Neigung der anderen Führungsbahn an. Die Hubeinrichtung (39) weist für diese Neigungsänderung, die vorzugsweise eine in Figur 1 schematisch durch Pfeile dargestellte Schwenkbewegung ist, eine geeignete Einrichtung (45) zur Neigungsanpassung auf.

Die Hubeinrichtung (39) weist ein Bedienmittel (42) für den Werker (12) und ein Rückstellelement (40) auf. Das Bedienmittel (42) ist z.B. als Griff am freien Ende des Bahnabschnitts (41) ausgebildet. Das Rückstellelement (40) kann als Feder oder wie in Figur 1 als Gegengewicht oder in beliebig anderer geeigneter Weise ausgebildet sein.

Der Bahnabschnitt (41) weist außerdem ein
Positioniermittel (46) für den Bauteilträger (4) auf, das z.B. als Anschlag am freien Ende des Bahnabschnitts (41) ausgebildet ist. Außerdem kann das Positioniermittel (46) eine Klemmeinrichtung zur temporären Fixierung des Bauteilträgers (4) bei der Hubbewegung aufweisen.

Die Hubeinrichtung (39) kann konstruktiv in unterschiedlicher Weise ausgebildet sein. In der Ausführungsform von Figur 1 weist die Hubeinrichtung (39) eine Schwenkeinrichtung (43) mit einem oder mehreren Lenkern (44) auf, die vorzugsweise am Gestell (8) angeordnet und drehbar gelagert ist. Bei einer solchen Ausführung bietet sich ein Gegengewicht als Rückstellelement (40) an, das am rückwärtigen Lenkerende jenseits der Lagerstelle angeordnet ist.

Die Einrichtung zur Neigungsanpassung (45) kann mit der Schwenkeinrichtung (43) in geeigneter Weise verbunden oder gekoppelt sein. Bei Einsatz eines Lenkergetriebes mit entsprechender Kinematik, kann bei der Hub- und Schwenkbewegung des Bahnabschnitts (41) zugleich dessen Neigung verändert werden. In einer anderen Variante kann die besagte Einrichtung (45) z.B. von einem separaten Stellelement gebildet werden, welches an der Schwenkeinrichtung (43) selbst oder alternativ stationär am Gestell (8) oder einer der Führungsbahnen (6,7) angeordnet ist und z.B. den Bahnabschnitt (41) durch Anschlag in der Nähe der Andockstellung dreht und dadurch die Neigung anpasst. In weiterer Variation kann ein steuerbares Stellelement, z.B. ein Hubzylinder oder dergleichen als Einrichtung (45) eingesetzt werden.

In einer anderen, nicht dargestellten Variante, kann die Hubeinrichtung (39) als Lineareinheit oder als kombinierte Schwenk- und Lineareinheit ausgebildet sein und eine entsprechende Kinematik für die Ausführung der Hubbewegung und gegebenenfalls der Neigungsanpassung haben. Auch in diesem Fall erfolgt die Bedienung manuell durch den Werker (12) und mit dessen Handkraft, wobei das Rückstellelement (40) in anderer geeigneter Weise, z.B. als Feder, ausgebildet sein kann.

Die Zuführeinrichtung (1) kann ferner eine Sicherheitseinrichtung (47) aufweisen. Diese kann z.B. bei Figur 1 an der Rücklaufbahn (7) angeordnet sein und detektiert die Andock- und Bündigstellung des Bahnabschnitts (41). Sie sperrt außerdem das Bahnende für ankommende leere Bauteilträger (4) während der Abwesenheit des Bahnabschnitts (41). Sie kann andererseits kontrollieren, ob nach Freigabe ein Bauteilträger (4) auf den angedockten Bahnabschnitt (41) gerollt ist und dort die korrekte Position einnimmt. Die Sicherheitseinrichtung (47) kann hierfür ein oder mehrere entsprechende Sensoren, Auswerteeinheiten und Anzeigemittel aufweisen.

Eine ähnliche Sicherheitseinrichtung (47) kann auch an der Zuführbahn (6) angeordnet sein. Diese kann z.B. die Beladung des Bauteilträgers (4) auf Vollständigkeit und auf Vorhandensein der richtigen Bauteile (3) kontrollieren. Dies ist insbesondere wichtig, wenn auf einem Bauteilträger (4) ein Set unterschiedlicher und z.B. für eine gemeinsame Montage zusammen gehörender Bauteile (3) geladen wird. Bei einer automatisierten Entladung muss sicher gestellt sein, dass die richtigen Bauteile (3) vollständig und an der richtigen Stelle des Bauteilträgers (4) angeordnet sind. Ähnliche Anforderungen ergeben sich auch bei einer Assemblierung und einem Fügen von in einer Gruppe oder einem Set zusammen gestellter Bauteile (3). An der Ladestelle (10) kann die Zuführbahn (6) außerdem ein Hilfsmittel zum sicheren Starten des beladenen Bauteilträgers (4) aufweisen.

Bei der in Figur 1 gezeigten Zuführeinrichtung (1) sind die Rollkörper (15) frei drehbar. Alternativ kann ein oder mehreren Rollkörpern (15) eine Bremseinrichtung, insbesondere eine generatorische Bremse zugeordnet sein, die lauf- und drehrichtungsabhängig einstellbar oder steuerbar und außerdem an unterschiedliche Neigungswinkel der Führungsbahnen (6,7) anpassbar ist. Eine generatorische Bremse kann z.B. durch einen vom Rollkörper angetriebenen Generator, vorzugsweise Gleichstromgenerator, und einen Laststromkreis mit ein oder mehreren Leistungsaufnehmern, z.B. ohmschen Widerständen, in gegebenenfalls schaltbarer Anordnung, gebildet werden.

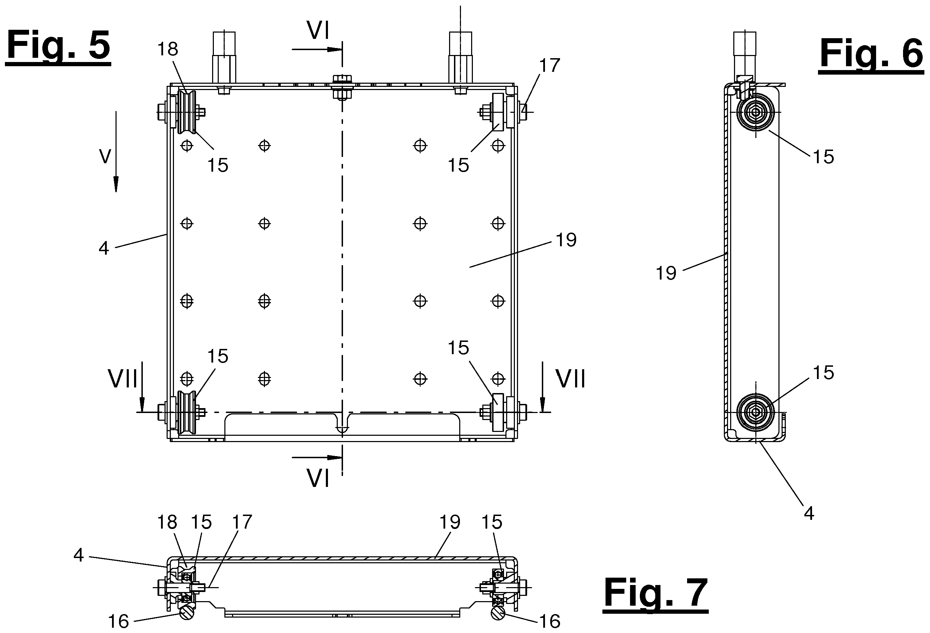

Figur 5 bis 7 zeigen beispielhaft die Ausbildung eines Bauteilträgers (4). Dieser weist z.B. einen Korpus (19) auf, der als quaderförmiges, abgekantetes und dünnwandiges Blechgehäuse ausgebildet ist, welches nach unten offen ist und an der Oberseite eine Anbaufläche für ein oder mehrere der in Figur 1 dargestellten Bauteilaufnahmen (5), gegebenenfalls mit rasterartigen Verbindungsstellen, aufweist. Die Rollkörper oder Räder (15) sind an den Eckbereichen des Korpus (19) und an den abgekanteten Seitenwänden gelagert und drehen sich um eine quer zur jeweiligen Laufrichtung (V,R) gerichtete Achse (17).

Wie Figur 5 und 7 verdeutlichen, können an einer Längsseite des Korpus (19) die Räder (15) eine unebene und an ein ebenfalls unebenes Führungsmittel (16) angepasste Umfangskontur aufweisen, die z.B. als Umfangsnut (18) ausgebildet ist. Das Führungsmittel (16) kann als gerundete Schiene ausgebildet sein und formschlüssig mit der Nut (18) im Eingriff stehen. An der anderen Korpusseite können die Räder (15) eine zylindrische Lauffläche aufweisen, die keinen Formschluss zum Führungsmittel (16) haben muss, welches hier ebenfalls als gerundete Schiene ausgebildet sein kann. Die Räder (15) können alternativ einen randseitigen Führungsbund aufweisen.

Die Übergabeeinrichtung (14) kann in der vorerwähnten Weise auch als Vorpositioniereinrichtung (20), insbesondere als Aufsetzhilfe, ausgebildet sein. Figur 2 bis 4 und 8 bis 10 zeigen diese Ausbildung.

Die Vorpositioniereinrichtung (20) ist für einen losen und vom Werker (12) manuell übergebenen Bauteilträger (4) vorgesehen und ausgebildet, wobei der Werker z.B. einen leeren Bauteilträger (4) von der Rücklaufbahn (7) abnimmt und an die Zuführbahn (6) übergibt. Der Werker (12) kann dabei den Bauteilträger (4) mit anfänglicher Distanz von der Führungsbahn (6) an der Vorpositioniereinrichtung (20) in einer vorgegebenen Position aufsetzen und temporär fixieren sowie anschließend an die Führungsbahn (6) übergeben und dabei die zunächst distanzierten Gleit- und Führungsmittel (15,16) in Eingriff bringen. Die Vorpositioniereinrichtung (20) weist hierfür eine relativ zur Führungsbahn (6) beweglich gelagerte Aufnahme (21) für einen Bauteilträger (4) und eine manuell bedienbare und mit Handkraft betätigbare Bewegungseinrichtung (22) für die Aufnahme (21) auf.

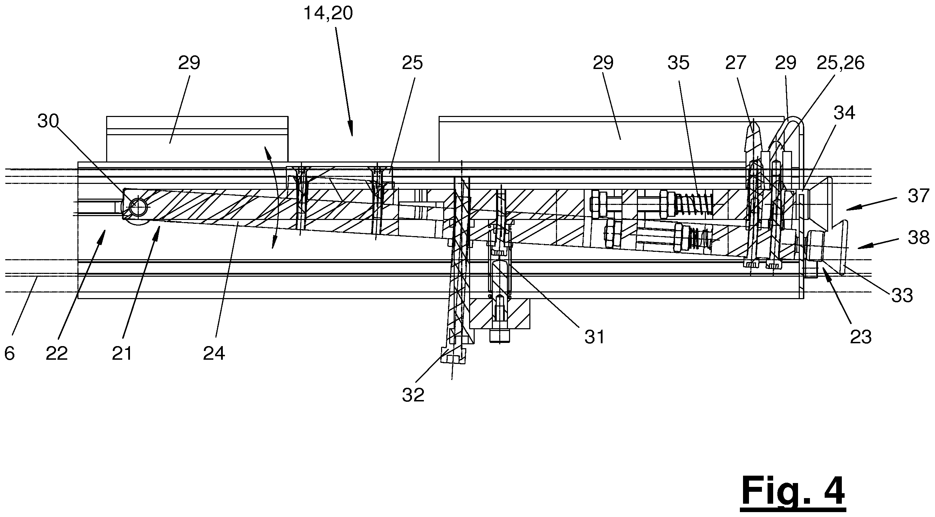

Für die Vorpositionierung und die anschließende Übergabe eines Bauteilträgers (4) kann die Aufnahme (21) zwischen einer erhabenen Aufsetzposition (37) und einer abgesenkten Übergabeposition (38) beweglich sein, wie dies in Figur 4 dargestellt ist. Die Gleit- und Führungsmittel (15,16) sind in der Aufsetzposition (37) voneinander distanziert und kommen in der Übergabeposition (38) in gegenseitigen Eingriff. Die Gleit- und Führungsmittel (15,16) können dabei in der vorbeschriebenen Weise als Rollkörper und Schienen ausgebildet sein. Durch die anfängliche Distanzierung werden eventuelle Stoßbelastungen beim Aufsetzen des Bauteilträgers (4) nur auf den Korpus (19), aber nicht auf die relativ kleinen und empfindlichen Lager der Rollkörper oder Räder (15) des Bauteilträgers (4) geleitet. Entsprechendes gilt bei einer kinematischen Umkehr und der Anordnung von Rollkörpern (15) an der Führungsbahn (6).

Die Bewegungseinrichtung (22) weist ein Bedienmittel (23) und ein Rückstellelement (31) auf. Das Rückstellelement (31) kann die Aufnahme (21) in die Aufsetzposition (37) zwingen und muss vom Werker (12) für die Übergabe des Bauteilträgers (4) und die Einnahme der Übergabeposition (38) überwunden werden. Ein Anschlag (32) begrenzt die Rückstellbewegung des z.B. als Feder ausgebildeten Rückstellelements (31).

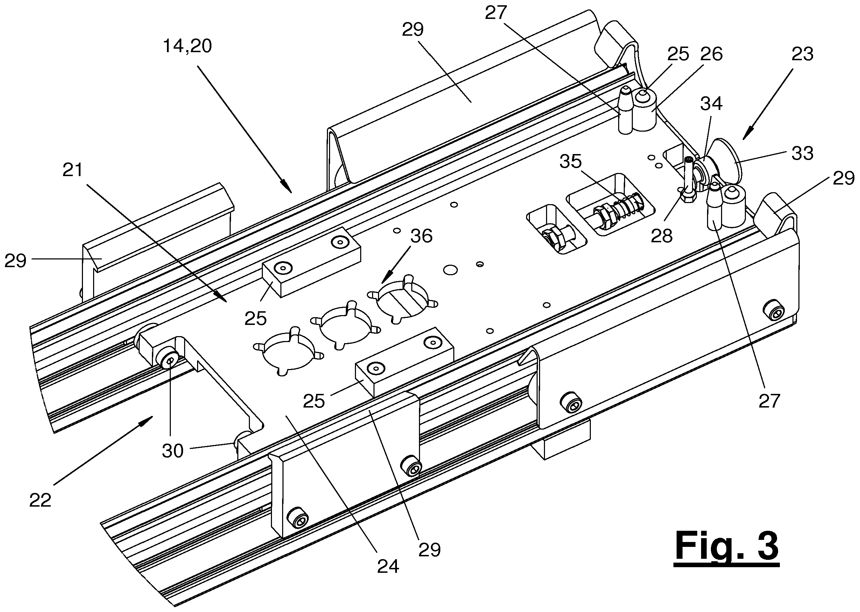

Die Aufnahme (21) ist gemäß Figur 2 und 3 in dem Endbereich der Führungsbahn (6) angeordnet und kann z.B. an der Führungsbahn (6) gelagert sein. Wie Figur 2 verdeutlicht, kann die Führungsbahn (6) zwei parallele Längsträger und mehrere verteilte Querträger aufweisen, wobei die Führungsmittel (16), insbesondere Schienen, an der Oberseite der Längsträger angeordnet sind. Die Aufnahme (21) kann in dem Freiraum zwischen den Längsträgern angeordnet sein.

Die Kinematik für die Bewegung der Aufnahme (21) zwischen der Aufsetz- und der Übergabeposition (37,38) und die entsprechende Lagerung sind beliebig wählbar. Im gezeigten Ausführungsbeispiel kommt ein einzelnes Schwenklager (30) zum Einsatz, welches mit den beiden Längsträgern verbunden ist. Die Aufnahme (21) ist hierbei als schwenkbare Wippe ausgebildet, die von dem Rückstellelement (31) nach oben gedrückt wird. Alternativ kann für die Lagerung ein Lenkergetriebe, insbesondere mit Parallellenkern, vorhanden sein, mit dem die Aufnahme (21) ggf. mit gleich bleibender Neigung gehoben und gesenkt werden kann. Alternativ sind andere Lagerausbildungen, z.B. als Schiebeführung oder dergleichen möglich.

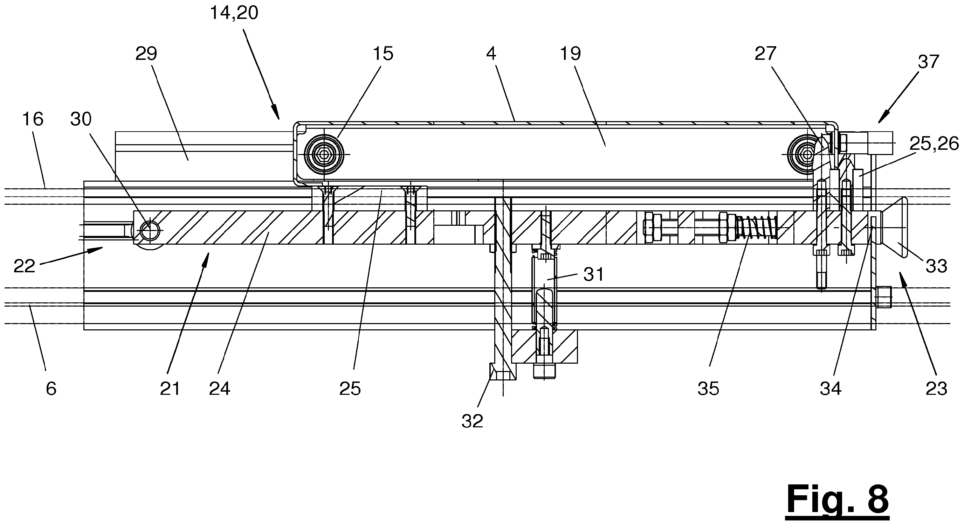

Bei der gezeigten Wippanordnung nimmt die Aufnahme (21) in der Aufsetzposition (38) eine zur Führungsbahn (6) parallele und nach oben distanzierte Lage ein. Figur 4 und 8 zeigen diese Ausrichtung. In der Übergabeposition (38) ist die Aufnahme (21) abgeschwenkt und zumindest bereichsweise in die Führungsbahn (6) eingetaucht, wobei der Bauteilträger (4) an die Führungsbahn (6) übergeben und von der Aufnahme (21) gelöst ist.

Wie Figur 3 verdeutlicht, besteht die Aufnahme (21) aus einem z.B. plattenförmigen Träger (24), an dessen einem, zur Entladestelle (11) weisenden Ende das Schwenklager (30) angeordnet ist. Auf der Trägeroberseite sind mehrere erhabene Stützmittel (25) angeordnet, auf denen beim Aufsetzen des Bauteilträgers (4) der Korpus (19) aufschlägt und anliegt. Ein oder mehrere Stützmittel (25) können ein Dämpfelement (26) aufweisen, um Stoßbelastungen beim Aufsetzen abzudämpfen. Ein Teil der Stützmittel (25) kann z.B. gemäß Figur 3 als quaderförmige Blöcke ausgebildet und am Rand des Trägers (24) angeordnet sein. An dem dem Schwenklager (30) gegenüberliegenden Trägerende können ebenfalls Stützmittel (25) angeordnet sein, die z.B. als aufrechte Pins mit den besagten Dämpfelementen (26) ausgebildet sind. Als Dämpfelemente können Pufferkörper aus einem elastischen Material, z.B. Kunststoff oder dergleichen, eingesetzt werden.

Die Aufnahme (21) weist ferner ein oder mehrere Positioniermittel (27) auf, die beim Aufsetzen mit dem Bauteilträger (4), insbesondere dessen Korpus (19), in einen formschlüssigen Positioniereingriff treten. Die Positioniermittel (27) sind z.B. als zwei distanzierte Dorne mit Kegelspitzen ausgebildet, die an dem dem Lager (30) gegenüber liegenden Trägerrand angeordnet sind und von unten her in entsprechende Öffnungen am Korpus (19) greifen. Die Positioniermittel (27) können in der Nähe der vorgenannten Stützmittel (25) mit den Dämpfmitteln (26) angeordnet sein.

Die Aufnahme (21) kann ferner ein oder mehrere Sicherungsmittel (28), z.B. hochstehende Indizierstifte, am Träger (24) aufweisen, die zur Detektion passender und zugehöriger Bauteilträger (4) dienen und mit entsprechenden Formmerkmalen am Korpus (19), z.B. Indexöffnungen, in Eingriff treten. Die Sicherungsmittel (28) können ebenfalls in der Nähe der Positioniermittel (27) und der Stütz- und Dämpfelemente (25,26) angeordnet sein.

Wie Figur 3 verdeutlicht, kann an der Aufnahme (21) außerdem eine Sicherheitseinrichtung (36) angeordnet sein die nicht im Einzelnen dargestellt ist und durch einen Pfeil symbolisiert ist. Figur 3 zeigt hierfür mehrere Aufnahmeöffnungen im Träger (24), in den ein steuerbarer Hubstift oder dgl. angeordnet sein kann, der als Freigabesicherung (36) fungiert und Bestandteil der vorerwähnten Sicherheitseinrichtung für die Kontrolle der korrekten Beladung des Bauteilträgers (4) sein kann. Erst wenn die Sensorik eine korrekte Beladung detektiert und meldet, taucht die Freigabesicherung (36) ab und gibt den Bauteilträger (4) für die Fahrt auf der Zuführbahn (6) frei.

Für die Vorpositionierung eines Bauteilträgers (4) können außerdem ein oder mehrere Einweiser (29) vorhanden sein, die als schräge Gleitflächen ausgebildet sind. Ein oder mehrere Einweiser (29) können stationär an der Führungsbahn (6) und/oder an der Aufnahme (21) angeordnet sein. Sie können sowohl in der Aufsetzposition (37), als ggf. auch in der Übergabeposition (38) wirksam sein und für eine seitliche Führung des Bauteilträgers (4) sorgen.

Das vorerwähnte Bedienmittel (23) ist in den gezeigten Ausführungsformen an der Aufnahme (21) angeordnet. Es weist einen beweglichen, insbesondere ausziehbaren Griff (33) mit einer Rückstellung (35), z.B. einer Rückstellfeder, und mit einer Verriegelung (34) auf. Wie Figur 4 und 8 verdeutlichen, wirkt die Verriegelung (34) mit der Führungsbahn (6) und einem dortigen aufrechten Stützbereich zusammen, welcher z,B, eine in Figur 3 und 4 angedeutete vertikale Nut in Schlüssellochform aufweist. Der Griff (33) weist einen rückwärtigen verbreiterten Bund auf und ist an einer dünnen, gegen die Kraft der Rückstellung (35) verschiebbaren Stange endseitig angeordnet. In der Aufsetzposition (37) ist die Verriegelung (34) wirksam, wobei der verdickte Bund im verbreiterten Eingangsbereich der Schlüsselloch-Nut aufliegt und somit die Aufnahme (21) an der dem Lager (30) gegenüber liegenden Seite abstützt. Sie hat dadurch eine beim Aufsetzen des Bauteilträgers (4) stabile Lage.

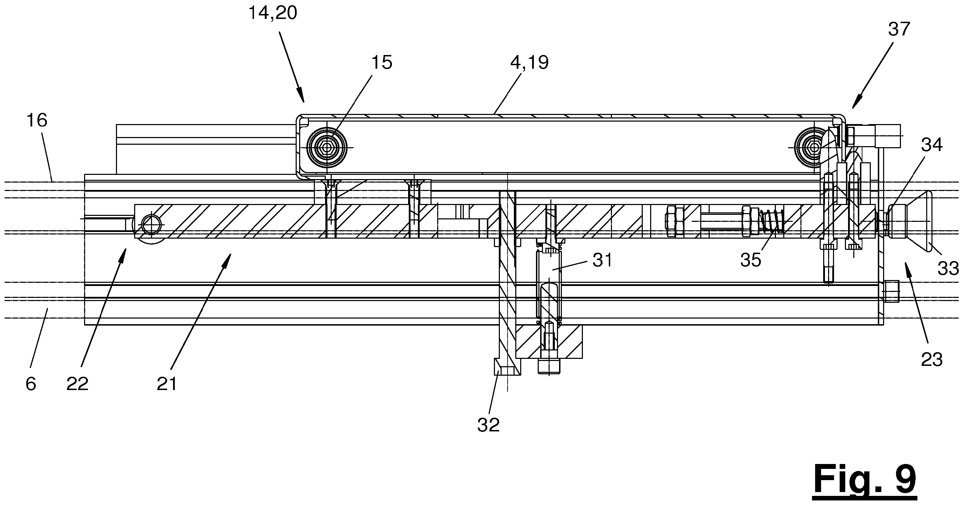

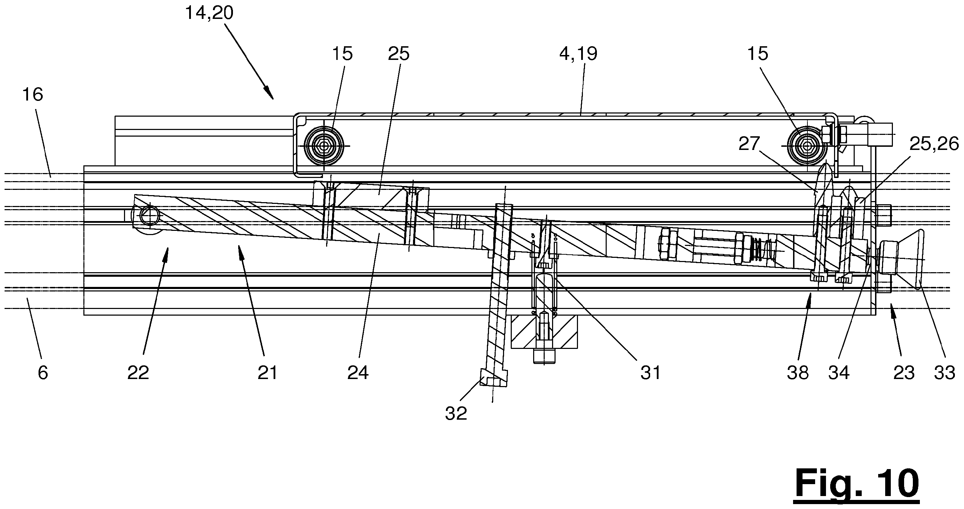

Figur 8 zeigt ebenfalls diese Aufsetzposition (37) mit geschlossener Verriegelung (34). Wenn anschließend der Bauteilträger (4) übergeben werden soll, wird der Griff (33) gezogen, wobei der verdickte Bund außer Eingriff mit der Schlüsselloch-Nut tritt und die dünnere Stange in den unteren schmalen Nutbereich eintreten kann. Figur 9 verdeutlicht diese Zwischenstellung. Die Verriegelung (34) ist dadurch geöffnet, wodurch die Aufnahme (21) ihre randseitige Abstützung verliert und der Bediener (12) die Aufnahme (21) nach unten in die in Figur 10 gezeigte Übergabeposition (38) schwenken kann. Der Bauteilträger (4) wird dabei von der Aufnahme (21) gelöst und an die Führungsbahn (6) übergeben sowie auf deren Führungsmittel (16) mit seinen Rollkörpern (15) aufgesetzt. Sobald der Bauteilträger (4) die Vorpositioniereinrichtung (20) verlassen hat, drückt das Rückstellelement (31) die Aufnahme (21) wieder nach oben in die Aufsetzposition (37), wobei die Verriegelung (34) automatisch schließt und eine stabile Stützlage herstellt.

Die vorbeschriebene Zuführeinrichtung (1) kann gemäß Figur 1 an einer Bearbeitungsstation (2) angeordnet sein, die aus Unfallschutzgründen von einer Schutzeinrichtung (9), z.B. einem Zaun, umgeben ist. Die Zuführeinrichtung (1) dient der unfallsicheren Zuführung von Bauteilen (3) von außen in die Bearbeitungsstation (2) sowie zur Bearbeitungseinrichtung (13) und erstreckt sich durch eine entsprechend konturierte Öffnung in der Schutzeinrichtung (9). Die Beladestelle (10) befindet sich außerhalb und die Entladestelle (11) innerhalb der Schutzeinrichtung (9).

Abwandlungen der gezeigten und beschriebenen Ausführungsformen sind in verschiedener Weise möglich. Insbesondere können die Merkmale der verschiedenen Ausführungsbeispiele in beliebiger Weise miteinander kombiniert und vertauscht werden.

Die Übergabeeinrichtung (14) an der Ladestelle (10) kann als Hubeinrichtung (39) oder als Vorpositioniereinrichtung (20) ausgebildet sein. Es ist auch eine Kombination beider Einrichtungen (20,39) möglich, z.B. aus Redundanzgründen oder für einen Wechsel oder eine Neuzuführung von Bauteilträgern (4). Die Vorpositioniereinrichtung (20) kann dabei z.B. an dem beweglichen Bahnabschnitt (41) angeordnet sein.

Die Gleit- und Führungsmittel (15,16) können variieren. Die Gleitmittel (15) können z.B. reibungsarme und dabei in der Regel stoßempfindliche Gleitelemente oder gleitfähige Beschichtungen aufweisen. Auch hier ist eine beliebige Zuordnung und Vertauschung zwischen Führungsbahn (6,7) und Bauteilträger (4) möglich. Auch die Führungsmittel (16) können in anderer Weise ausgebildet sein. Sie können von ebenen Führungs- oder Gleitleisten oder auf andere beliebige Weise gebildet werden.

### BEZUGSZEICHENLISTE

- 1: Zuführeinrichtung
- 2: Bearbeitungsstation
- 3: Bauteil
- 4: Bauteilträger, Transportwagen
- 5: Bauteilaufnahme
- 6: Führungsbahn, Zuführbahn
- 7: Führungsbahn, Rücklaufbahn
- 8: Gestell
- 9: Schutzeinrichtung, Zaun
- 10: Ladestelle
- 11: Entladestelle
- 12: Werker
- 13: Bearbeitungseinrichtung, Roboter
- 14: Übergabeeinrichtung
- 15: Gleitmittel, Rollkörper, Rad
- 16: Führungsmittel, Schiene
- 17: Achse
- 18: Nut
- 19: Korpus
- 20: Vorpositioniereinrichtung, Aufsetzhilfe
- 21: Aufnahme
- 22: Bewegungseinrichtung
- 23: Bedienmittel
- 24: Träger
- 25: Stützmittel, Sockel, Pin
- 26: Dämpfelement
- 27: Positioniermittel, Dorn
- 28: Sicherungsmittel, Indizierstift
- 29: Einweiser
- 30: Lager, Schwenklager
- 31: Rückstellelement, Feder
- 32: Anschlag
- 33: Griff
- 34: Verriegelung
- 35: Rückstellung, Feder
- 36: Sicherheitseinrichtung, Freigabesicherung
- 37: Aufsetzposition
- 38: Übergabeposition
- 39: Hubeinrichtung, Übersetzhilfe
- 40: Rückstellelement, Gegengewicht
- 41: Bahnabschnitt, Endabschnitt
- 42: Bedienmittel, Griff
- 43: Schwenkeinrichtung
- 44: Lenker
- 45: Einrichtung zur Neigungsanpassung
- 46: Positioniermittel, Anschlag
- 47: Sicherheitseinrichtung, Sensor
- 48: Kopplungseinrichtung
- 49: Positioniereinrichtung
- V: Bewegungsrichtung vorwärts
- R: Bewegungsrichtung rückwärts

## Patentansprüche

1. Zuführeinrichtung für Bauteile (3), wobei die Zuführeinrichtung (1) eine abwärts geneigte Führungsbahn (6), einen mobilen, mit der Führungsbahn (6) lösbar verbundenen Bauteilträger (4) und zusammenwirkende Gleit- und Führungsmittel (15,16), insbesondere Rollkörper und Schienen, an der Führungsbahn (6) und am Bauteilträger (4) aufweist, wobei die Zuführeinrichtung (1) eine Ladestelle (10) aufweist, an der ein Bauteilträger (4) von einem Werker (12) mit der Führungsbahn (6) verbunden und ggf. mit einem oder mehreren Bauteilen (3) beladen wird, **dadurch gekennzeichnet, dass** die Zuführeinrichtung (1) an der Ladestelle (10) eine manuell bedienbare und mit Handkraft gegen ein Rückstellelement (31,40) betätigbare Übergabeeinrichtung (14) zur positionierten Übergabe eines Bauteilträgers (4) an die Führungsbahn (6) aufweist, wobei die Übergabeeinrichtung (14) als Hubeinrichtung (39) ausgebildet ist.

2. Zuführeinrichtung nach Anspruch 1, **dadurch gekennzeichnet, dass** mit der Hubeinrichtung (39) ein Bahnabschnitt (41) mitsamt einem darauf befindlichen Bauteilträger (4) bewegt wird, vorzugsweise mit einer vertikalen Richtungskomponente.

3. Zuführeinrichtung nach Anspruch 1 oder 2, **dadurch gekennzeichnet, dass** die Zuführeinrichtung (1) mehrere Führungsbahnen (6,7) für Vor- und Rücklauf von beladenen und leeren Bauteilträgern (4) aufweist.

4. Zuführeinrichtung nach Anspruch 1, 2 oder 3, **dadurch gekennzeichnet, dass** die Hubeinrichtung (39) als Übersetzhilfe ausgebildet ist zur Umsetzung eines Bauteilträgers (4) von einer Rücklaufbahn (7) auf eine Zuführbahn (6) und/oder die Hubeinrichtung (39) einen Bauteilträger (4) in eine belastungsgünstige Position für eine dortige Beladung mit ein oder mehreren Bauteilen (3) durch einen Werker bringt.

5. Zuführeinrichtung nach Anspruch 1, 2 oder 3, **dadurch gekennzeichnet, dass** die Hubeinrichtung (39) als Schwenkeinheit oder als Lineareinheit oder als kombinierte Schwenk- und Lineareinheit ausgebildet ist.

6. Zuführeinrichtung nach einem der vorhergehenden Ansprüche, **dadurch gekennzeichnet, dass** die Hubeinrichtung (39) eine Vorpositioniereinrichtung (20) am beweglichen Bahnabschnitt (41) aufweist.

7. Zuführeinrichtung nach einem der Ansprüche 2 bis 6, **dadurch gekennzeichnet, dass** der Bahnabschnitt (41) bei beiden Führungsbahnen (6,7) einen bündig andockenden Endabschnitt bildet, der mit einer Kopplungseinrichtung (48) in der Andockstellung sicherbar und arretierbar ist.

8. Zuführeinrichtung nach einem der Ansprüche 2 bis 7, **dadurch gekennzeichnet, dass** der Bahnabschnitt (41) jeweils mit der angedockten Führungsbahn (6,7) fluchtet und deren Neigungswinkel annimmt.

9. Zuführeinrichtung nach einem der Ansprüche 2 bis 8, **dadurch gekennzeichnet, dass** die Hubeinrichtung (39) eine Einrichtung (45) zur Neigungsanpassung des Bahnabschnitt (41) an die Neigung der Führungsbahn (6,7) aufweist.

10. Zuführeinrichtung nach einem der Ansprüche 1 bis 5, **dadurch gekennzeichnet, dass** der Bauteilträger (4) eine oder mehrere feste oder wechselbare Bauteilaufnahmen (5) für jeweils ein oder mehrere Bauteile (3) aufweist.

11. Zuführeinrichtung nach einem der vorhergehenden Ansprüche, **dadurch gekennzeichnet, dass** die Gleit- und Führungsmittel (15,16) zumindest bereichsweise eine gegenseitig angepasste unebene Kontur für einen formschlüssigen Eingriff aufweisen.

12. Zuführeinrichtung nach einem der vorhergehenden Ansprüche, **dadurch gekennzeichnet, dass** die Zuführeinrichtung (1) eine Sicherheitseinrichtung (36,47) für die Kontrolle der Bewegung eines Bauteilträgers (4) aufweist.

13. Zuführeinrichtung nach Anspruch 12, **dadurch gekennzeichnet, dass** die Sicherheitseinrichtung (47) an der Rücklaufbahn (7) angeordnet ist und einen oder mehrere Sensoren, Auswerteeinheiten und Anzeigemittel aufweist, wobei die Sicherheitseinrichtung (47) die Andock- und Bündigstellung des Bahnabschnitts (41) detektiert und ggf. das Bahnende für ankommende leere Bauteilträger (4) während der Abwesenheit eines dortigen Bahnabschnitts (41) sperrt und/oder kontrolliert, ob nach Freigabe ein Bauteilträger (4) auf einen angedockten Bahnabschnitt (41) gerollt ist und dort die korrekte Position einnimmt.

14. Zuführeinrichtung nach Anspruch 12 oder 13, **dadurch gekennzeichnet, dass** die Sicherheitseinrichtung (47) an der Zuführbahn (6) angeordnet ist und einen oder mehrere Sensoren, Auswerteeinheiten und Anzeigemittel aufweist, wobei die Sicherheitseinrichtung (47) die Beladung des Bauteilträgers (4) auf Vollständigkeit und auf Vorhandensein der richtigen Bauteile (3) kontrolliert.

15. Bearbeitungsstation mit einer Zuführeinrichtung (1) für Bauteile (3), welche sich durch eine Öffnung in einer die Bearbeitungsstation (2) umgebenden Schutzeinrichtung (9) erstreckt, wobei die Zuführeinrichtung (1) eine abwärts geneigte Führungsbahn (6), einen mobilen, mit der Führungsbahn (6) lösbar verbundenen Bauteilträger (4) und zusammenwirkende Gleit- und Führungsmittel (15,16), insbesondere Rollkörper und Schienen, an der Führungsbahn (6) und am Bauteilträger (4) aufweist, wobei die Zuführeinrichtung (1) eine Ladestelle (10) aufweist, an der ein Bauteilträger (4) von einem Werker (12) mit der Führungsbahn (6) verbunden und ggf. mit einem oder mehreren Bauteilen (3) beladen wird, **dadurch gekennzeichnet, dass** die Zuführeinrichtung (1) nach mindestens einem der Ansprüche 1 bis 14 ausgebildet ist.

## Claims

1. Feed device for components (3), wherein the feed device (1) has a downwardly inclined guide track (6), a mobile component carrier (4) connected detachably to the guide track (6) and cooperating sliding and guide means (15, 16), in particular rolling elements and rails, on the guide track (6) and on the component carrier (4), wherein the feed device (1) has a loading point (10) at which a component carrier (4) is connected to the guide track (6) by a worker (12) and optionally loaded with one or more components (3), **characterized in that** the feed device (1) has, at the loading point (10), a manually operable transfer device (14), which is actuable by manual force counter to a restoring element (31, 40), for transferring a component carrier (4) to the guide track (6) in a positioned manner, wherein the transfer device (14) is designed as a lifting device (39).

2. Feed device according to Claim 1, **characterized in that** a track section (41) together with a component carrier (4) located thereon is moved, preferably with a vertical directional component, with the lifting device (39).

3. Feed device according to Claim 1 or 2, **characterized in that** the feed device (1) has a plurality of guide tracks (6, 7) for the advance and return of loaded and empty component carriers (4) .

4. Feed device according to Claim 1, 2 or 3, **characterized in that** the lifting device (39) is designed as a transfer aid for transferring a component carrier (4) from a return track (7) onto a feed track (6), and/or the lifting device (39) brings a component carrier (4) into a position favourable for loading for loading there with one or more components (3) by a worker.

5. Feed device according to Claim 1, 2 or 3, **characterized in that** the lifting device (39) is designed as a pivoting unit or as a linear unit or as a combined pivoting and linear unit.

6. Feed device according to one of the preceding claims, **characterized in that** the lifting device (39) has a pre-positioning device (20) on the movable track section (41).

7. Feed device according to one of Claims 2 to 6, **characterized in that** the track section (41) in the case of the two guide tracks (6, 7) forms an end portion which docks on flush and is securable and lockable in the docking-on position with a coupling device (48).

8. Feed device according to one of Claims 2 to 7, **characterized in that** the track section (41) is in each case aligned with the docked-on guide track (6, 7) and takes up the angle of inclination thereof.

9. Feed device according to one of Claims 2 to 8, **characterized in that** the lifting device (39) has a device (45) for adapting the inclination of the track section (41) to the inclination of the guide track (6, 7).

10. Feed device according to one of Claims 1 to 5, **characterized in that** the component carrier (4) has one or more fixed or exchangeable component receptacles (5) for in each case one or more components (3).

11. Feed device according to one of the preceding claims, **characterized in that** the sliding and guide means (15, 16) at least regionally have a mutually matched, irregular contour for form-fitting engagement.

12. Feed device according to one of the preceding claims, **characterized in that** the feed device (1) has a safety device (36, 47) for controlling the movement of a component carrier (4).

13. Feed device according to Claim 12, **characterized in that** the safety device (47) is arranged on the return track (7) and has one or more sensors, evaluation units and display means, wherein the safety device (47) detects the docking-on and flush position of the track section (41) and optionally blocks the track end for incoming empty component carriers (4) during the absence of a track section (41) there and/or monitors whether, after release, a component carrier (4) has rolled onto a docked-on track section (41) and takes up the correct position there.

14. Feed device according to Claim 12 or 13, **characterized in that** the safety device (47) is arranged on the feed track (6) and has one or more sensors, evaluation units and display means, wherein the safety device (47) monitors the loading of the component carrier (4) for completeness and for the presence of the correct components (3).

15. Processing station having a feed device (1) for components (3), which extends through an opening in a protective device (9) surrounding the processing station (2), wherein the feed device (1) has a downwardly inclined guide track (6), a mobile component carrier (4) connected detachably to the guide track (6), and cooperating sliding and guide means (15, 16), in particular rolling elements and rails, on the guide track (6) and on the component carrier (4), wherein the feed device (1) has a loading point (10) at which a component carrier (4) is connected to the guide track (6) by a worker (12) and optionally loaded with one or more components (3), **characterized in that** the feed device (1) is designed according to at least one of Claims 1 to 14.

## Revendications

1. Dispositif d'alimentation de composants (3), le dispositif d'alimentation (1) présentant une voie de guidage inclinée vers le bas (6), un support de composants (4) mobile, relié de façon amovible avec la voie de guidage (6) ainsi que des moyens de glissement et de guidage (15, 16) coopérants, notamment des corps de roulement et des rails, sur la voie de guidage (6) et sur le support de composants (4), le dispositif d'alimentation (1) présentant un poste de chargement (10), dans lequel un ouvrier (12) relie un support de composants (4) avec la voie de guidage (6) et le garnit le cas échéant d'un ou de plusieurs composant (s) (3), **caractérisé en ce que** le dispositif d'alimentation (1) présente au poste de chargement (10) un dispositif de transfert (14) pouvant être manoeuvré manuellement et pouvant être actionné à la main contre un élément de rappel (31, 40), pour le transfert positionné d'un support de composants (4) à la voie de guidage (6), le dispositif de transfert (14) étant conçu sous la forme d'un dispositif de levage (39).

2. Dispositif d'alimentation selon la revendication 1, **caractérisé en ce qu'**à l'aide du dispositif de levage (39), un tronçon de voie (41) est déplacé avec le support de composants (4) qui y repose, de préférence avec une composante de direction verticale.

3. Dispositif d'alimentation selon la revendication 1 ou 2, **caractérisé en ce que** le dispositif d'alimentation (1) comporte plusieurs voies de guidage (6, 7) pour l'aller et le retour de supports de composants (4) chargés et vides.

4. Dispositif d'alimentation selon la revendication 1, 2 ou 3, **caractérisé en ce que** le dispositif de levage (39) est conçu sous la forme d'auxiliaire de transfert pour la transposition d'un support de composants (4) d'une voie de retour (7) sur une voie d'alimentation (6) et/ou **en ce que** le dispositif de levage (39) amène le support de composants (4) dans une position avantageuse pour le chargement, pour qu'il y soit chargé par un ouvrier avec un ou plusieurs composants (3).

5. Dispositif d'alimentation selon la revendication 1, 2 ou 3, **caractérisé en ce que** le dispositif de levage (39) est conçu sous la forme d'une unité pivotante ou d'une unité linéaire ou d'une unité pivotante et linéaire mixte.

6. Dispositif d'alimentation selon l'une quelconque des revendications précédentes, **caractérisé en ce que** sur le tronçon de voie mobile (41), le dispositif de levage (39) comporte un dispositif de prépositionnement (20).

7. Dispositif d'alimentation selon l'une quelconque des revendications 2 à 6, **caractérisé en ce que** sur les deux voies de guidage (6, 7), le tronçon de voie (41) forme un tronçon d'extrémité qui accoste à fleur, qui dans la position d'accostage peut être arrêté et bloqué à l'aide d'un dispositif d'accouplement (48).

8. Dispositif d'alimentation selon l'une quelconque des revendications 2 à 7, **caractérisé en ce que** le tronçon de voie (41) est respectivement aligné sur la voie de guidage (6, 7) accostée et adopte l'angle d'inclinaison de celle-ci.

9. Dispositif d'alimentation selon l'une quelconque des revendications 2 à 8, **caractérisé en ce que** le dispositif de levage (39) comporte un dispositif (45) destiné à adapter l'inclinaison du tronçon de voie (41) à l'inclinaison de la voie de guidage (6, 7).

10. Dispositif d'alimentation selon l'une quelconque des revendications 1 à 5, **caractérisé en ce que** le support de composants (4) comporte un ou plusieurs réceptacles à composants (5) fixes ou interchangeables, pour chaque fois un ou plusieurs composants (3).

11. Dispositif d'alimentation selon l'une quelconque des revendications précédentes, **caractérisé en ce qu'**au moins par endroits, les moyens de glissement et de guidage (15, 16) présentent un contour inégal, mutuellement adapté pour un engagement par complémentarité de forme.

12. Dispositif d'alimentation selon l'une quelconque des revendications précédentes, **caractérisé en ce que** le dispositif d'alimentation (1) comporte un dispositif de sécurité (36, 47), pour le contrôle et le déplacement d'un support de composants (4).

13. Dispositif d'alimentation selon la revendication 12, **caractérisé en ce que** le dispositif de sécurité (47) est placé sur la voie de retour (7) et comporte un ou plusieurs capteurs, modules d'évaluation et moyens d'affichage, le dispositif de sécurité (47) détectant la position d'accostage et affleurante du tronçon de voie (41) et pendant l'absence d'un tronçon de voie (41) à cet endroit, bloquant le cas échéant l'extrémité de voie pour des supports de composants (4) vides en arrivage et/ou contrôlant si après libération, un support de composants (4) est roulé sur un tronçon de voie (41) accosté et y adopte la position correcte.

14. Dispositif d'alimentation selon la revendication 12 ou 13, **caractérisé en ce que** le dispositif de sécurité (47) est placé sur la voie d'alimentation (6) et comporte un ou plusieurs capteurs, modules d'évaluation et moyens d'affichage, le dispositif de sécurité (47) contrôlant le chargement du support de composants (4) au niveau de son intégralité et de la présence des bons composants (3) .

15. Poste d'usinage, comprenant un dispositif d'alimentation (1) pour des composants (3), qui s'étend à travers une ouverture dans un dispositif de protection (9) entourant le poste d'usinage (2), le dispositif d'alimentation (1) comprenant une voie de guidage (6) inclinée vers le bas, un support (4) de composants mobile et relié de manière amovible avec la voie de guidage (6), ainsi que des moyens de glissement et de guidage (15, 16) coopérants, notamment des corps de roulement et des rails sur la voie de guidage (6) et sur le support de composants (4), le dispositif d'alimentation (1) comportant un poste de chargement (10), dans lequel un ouvrier (12) relie un support de composants (4) avec la voie de guidage (6) et le garnit le cas échéant d'un ou de plusieurs composant(s) (3), **caractérisé en ce que** le dispositif d'alimentation (1) est réalisé selon au moins l'une quelconque des revendications 1 à 14.
